# EUROPEAN PATENT SPECIFICATION

(11) **EP 3 793 825 B1**
(45) Date of publication and mention of the grant of the patent: **11.09.2024**
(21) Application number: 19804315.0
(22) Date of filing: 14.05.2019
(51) Int. Cl.: B32B 7/12, B32B 7/00, B32B 7/022, B32B 7/04, B32B 7/05, B32B 7/14, B32B 15/00

(54) **ADHESIVELY BONDED JOINT**
GEKLEBTE VERBINDUNG
RACCORD LIÉ PAR ADHÉSIF

(30) Priority: 14.05.2018 US 201862670916 P
(43) Date of publication of application: 24.03.2021
(60) Divisional application: 24191048.8
(73) Proprietor: Magna International Inc., Aurora, ON L4G 7K1 (CA)
(72) Inventor: ASHMORE, Erryn, Rochester Hills, MI 48307 (US); WOMACK, Darren, Windsor, ON N9E 4N4 (CA); MERINO, Miguel, Sterling Heights, MI 48314 (US); PANDIYAN, Arun, Prasath, Troy, MI 48084 (US); GABBITA, Vijaykumar, Hills, MI 48326 (US); CABRERA, Armando, Perez, Rochester Hills, MI 48307 (US)
(74) Representative: Grünecker Patent- und Rechtsanwälte PartG mbB
(86) International application number: PCT/US2019/032124
(87) International publication number: WO 2019/222151

(56) References cited:
- EP-A1- 2 289 771
- WO-A1-2018/234475
- GB-A- 2 375 328
- US-A- 6 051 327
- US-A1- 2010 092 733
- US-A1- 2010 132 110
- US-A1- 2014 001 791
- US-B1- 6 341 467
- US-B1- 6 467 834

## Description

### CROSS-REFERENCE TO RELATED APPLICATIONS

### BACKGROUND OF THE INVENTION

### 1. Field of the Invention

The invention relates generally to a bi-material component with an adhesively bonded joint and a method of forming the component with an adhesively bonded joint.

### 2. Related Art

This section provides background information related to the present disclosure which is not necessarily prior art.

Vehicles are the subject of many different types of stresses, such as rough driving surfaces, internal vibrations, and exposure to corrosive environments. Various components of vehicles experience these hardships more than others and the malfunction of one component oftentimes leads to the damage of interrelated parts.

In attempts to balance strength and weight, parts consisting of dissimilar metals exhibiting distinct material properties are joined to create a component having desired traits. Problems arise when these joined parts are exposed to a corrosive environment, particularly at an interface between the joined parts (bimetallic joint). Depending on electrode potentials between joined parts and environmental conditions, one or more of the joined parts can experience galvanic or bimetallic corrosion at the interface. Galvanic corrosion at the interface is particularly bad when the two joined parts are welded together. Galvanic corrosion is an accelerated type of corrosion that ultimately reduces a components operational life and further exposes interrelated parts to a risk of damage upon the component malfunctioning. One popular combination of materials known to generate heavy galvanic corrosion is steel and aluminum. In this combination, aluminum experiences aggressive galvanic corrosion, particularly when it is subjected to water and/or other environmental factors. Regardless of these persistent shortcomings, industries continue to use and experiment with different combinations of materials in order to achieve desired material properties within certain components. With steel and aluminum components, the risk of accelerated corrosion is balanced against the continued desire to reduce weight while maintaining a certain level of strength and ductility. Further relevant prior art is described in US 6 341 467 B1, WO 2018/234475 A1, GB 2 375 328 A, US 6 467 834 B1 and EP 2 289 771 A1.

Accordingly, there is a continuing desire to develop bimetallic and bi-material joints that are lightweight, strong, and not subjected to galvanic corrosion.

### SUMMARY OF THE INVENTION

This section provides a general summary of the inventive concepts associated with this disclosure and is not intended to be interpreted as a complete and comprehensive listing of all of its aspects, objectives, features, and advantages.

In particular, it is provided a method of forming a component, the method having the features defined in claim 1. Moreover, it is provided a component having the features defined in claim 7. Further preferred embodiments are defined in the dependent claims.

### BRIEF DESCRIPTION OF THE DRAWINGS

The drawings described herein are for illustrative purposes only of selected embodiments and are not intended to limit the scope of the present disclosure. The inventive concepts associated with the present disclosure will be more readily understood by reference to the following description in combination with the accompanying drawings wherein:
Figure 1A illustrates a cross-sectional view of a component having a bi-material joint in accordance with one embodiment of the disclosure;
Figure 1B illustrates a cross-sectional view of the component including a first part, a second part, and a the third part being joined in accordance with the arrangement presented in Figure 1;
Figure 1C illustrates a cross-sectional view of a layer of adhesive being injected between the first part, the second part, and the third part in accordance with the arrangement presented in Figure 1A;
Figure 2A illustrates a perspective view of the component with a bi-material joint in accordance with another embodiment;
Figure 2B illustrates a cross-sectional view of the component including a first part, a second part, and a third part being joined in accordance with the arrangement presented in Figure 2A;
Figure 2C illustrates a cross-sectional view of the a layer of adhesive being injected between the first part, the second part, and the third part in accordance with the arrangement presented in Figure 2A;
Figure 3A illustrates a perspective view of a cradle assembly formed in accordance with the subject disclosure;
Figure 3B illustrates a component of the cradle assembly constructed in accordance with yet another embodiment;
Figure 4A presents a method flow chart illustrating the steps in forming a component having an adhesively bonded bi-material joint; and
Figure 4B presents another method flow chart illustrating additional steps in forming a component having an adhesively bonded bi-material joint.

### DETAILED DESCRIPTION

Example embodiments will now be described more fully with reference to the accompanying drawings. In general, the subject embodiments are directed to a component with an adhesively bonded joint and a method of forming the component with an adhesively bonded joint. However, the example embodiments are only provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

Referring to the Figures, wherein like numerals indicate corresponding parts throughout the views, the component 20 with an adhesively bonded joint and method of forming the component 20 with an adhesively bonded joint is intended to join dissimilar materials and reduce or eliminate the risk of corrosion, particularly galvanic corrosion between dissimilar metals. As it will be appreciated with further reading, galvanic corrosion is reduced or eliminated without requiring significant costs or additional weight.

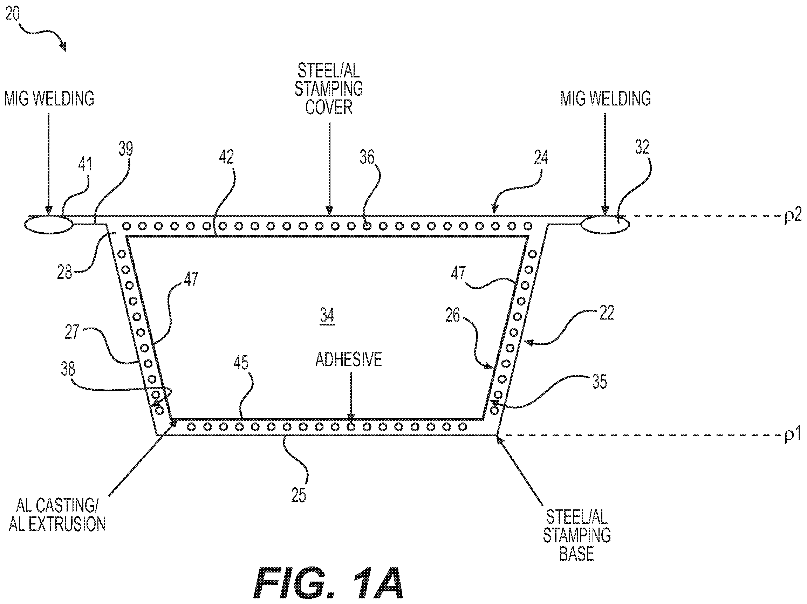

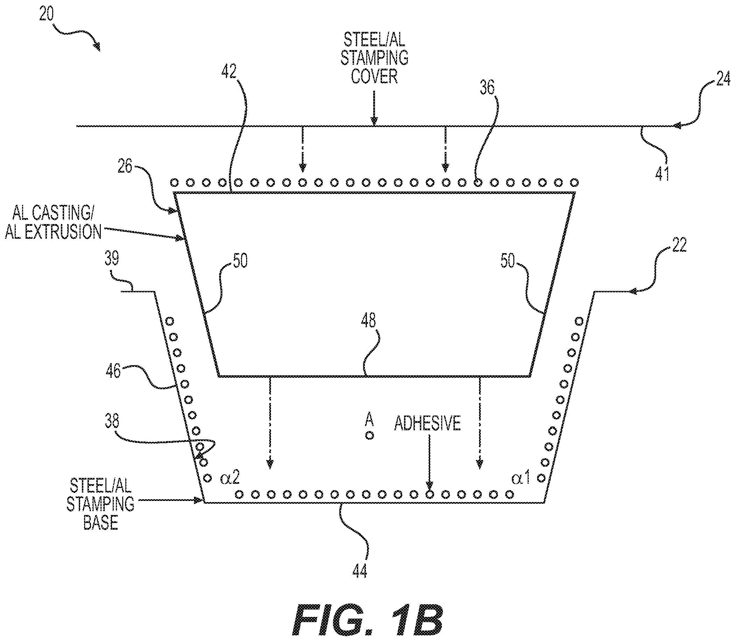

In reference to the example embodiment illustrated in Figures 1A and 1B, a component 20 with an adhesively bonded joint is shown. The component 20 includes a first part 22 and a second part 24 each formed of a first material and a third part 26 formed of a second material. For example, the first part 22 and the second part 24 can be formed of a first metal material such as Steel (i.e., a steel material) and the third part 26 may be formed of a second metal material such as Aluminum (i.e., an aluminum material). The steel material can include steel and alloys containing steel and the aluminum material can include aluminum and alloys containing aluminum. In some embodiments, the steel material may further be defined as an alloy consisting predominantly of steel and the aluminum material may be defined as an alloy consisting predominantly of aluminum. The first part 22, the second part 24, and the third part 26 are joined along a bi-material joint 28. The first part 22 and the second part 24 are joined by at a pair of joined interfaces 32 and combined to define a cavity 34 that extends therebetween. The joined interfaces 32 can include weld interfaces, adhesive interfaces, fastener interfaces, and also utilize other types of joining techniques. Stated another way, the first part 22 and second part 24 can be connected via adhesive, welding, fasteners, and other techniques. The third part 26 is disposed within the cavity 34 and spaced from the first part 22 and the second part 24 by at least one layer of adhesive 36. The first part 22, the second part 24, and the third part 26 may be stamped, extruded, or casted. In a preferred embodiment, the adhesive layer 36 is the only connection that the first and second parts 22, 24 have with the third part 26. In other words, the third part 26 is not connected with the other parts 22, 24 by any other means than the adhesive. In addition, it should also be appreciated that the first material and second materials may be combinations of two or more of Magnesium (alloys containing or consisting primarily of Magnesium), Aluminum, Steel and Fiber Reinforced Plastics. For example, the first material may be Aluminum and the second material may be Magnesium, the first material may be Steel and the second material may be Magnesium, the first material may be a Steel and the second material may be an Fiber Reinforced Plastic, and the first material may be Aluminum and the second material may be an Fiber Reinforced Plastic. Alternatively, the second material may be Aluminum and the first material may be Magnesium, the second material may be Steel and the first material may be Magnesium, the second material may be a Fiber Reinforced Plastic and the first material may be Steel, the second material may be Fiber Reinforced Plastic and the first material may be Aluminum. However, other combinations may be selected for the joint without departing from the subject invention.

As best illustrated in Figure 1B, the first part 22 has a bottom portion 25 that is planar and extends along a first plane ρ1 and two sidewalls 27 that are also planar extending upwardly from the bottom portion 25. The two sidewalls 27 extend from the bottom portion 25 to define a first angle α1 and a second angle α2. The two sidewalls 27 and bottom portion 25 define a channel 38 that extends along an axis A. Each sidewall 27 extends from the bottom portion 25 to a flat connection surface 39, each flat connection surface 39 extending along a second plane ρ2 that is parallel and spaced from the first plane ρ1. The second part 24 is sized to cover the channel 38, and includes at least one flat connection surface 41 (second connection surface) to abut each of the connection surfaces 39 (first connection surfaces), and enclose the cavity 34. It should be appreciated, however, the shape, size, and composition of the first part 22 and second part 24 can vary depending on the ultimate application of the component 20.

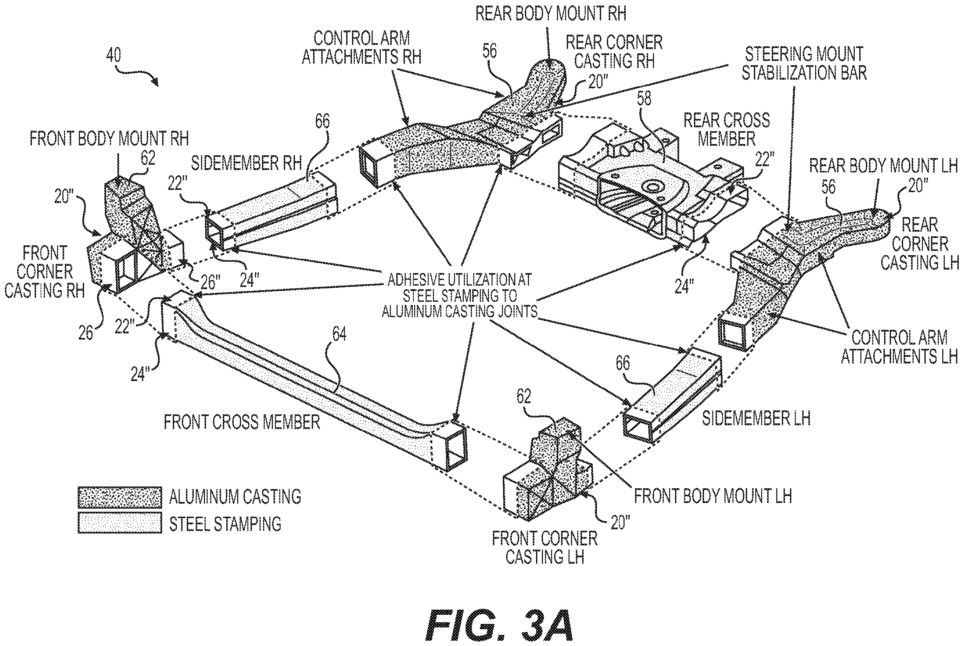

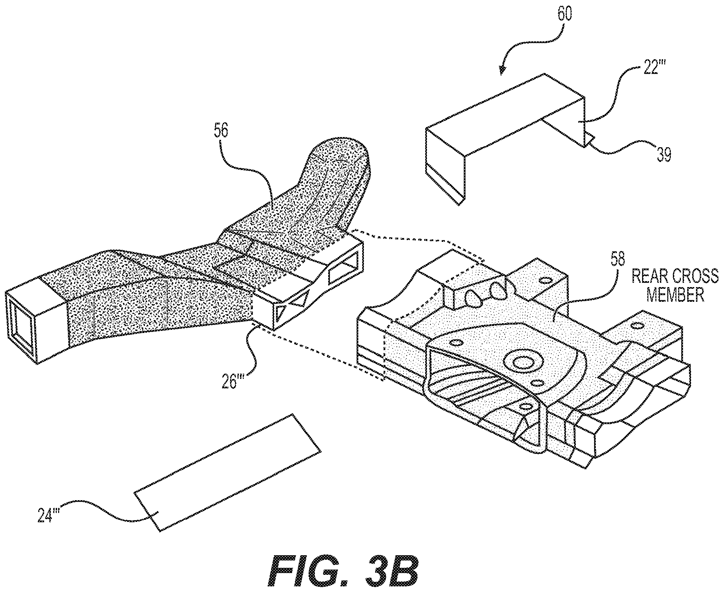

The third part 26 is sized such that there is a clearance 35 between it and the first part 22 and the second part 24. It is preferable that the clearance 35 is uniform and also preferable that the clearance 35 is less than 5mm, more preferably less than 3mm, and more preferably yet less than 1mm. The clearance 35 between parts is ultimately predetermined by the amount and type of adhesive 36 that will be used. More particularly, the third part 26 in the present embodiment has generally trapezoidal cross-section having a parallel top portion 42 and bottom 45 separated by sides 47 extending therebetween at angles similar and more preferably identical or substantially identical to α1 and α2. However, it should be appreciated that like the first and second parts 22, 24, the shape, size, and composition of the third part 26 depends on the ultimate application of the component 20. For example, the third part 24 can be shaped via stamping, extruding, or casting for ultimately forming a portion of a cradle assembly 40 for an automobile such as the application shown in Figures 3A and 3B. However, the component 20 provided in the present disclosure can alternatively be used in various other automotive and non-automotive applications. In certain embodiments, the third part 26 may be formed of the aluminum material.

The layer of adhesive 36 is applied to at least one of the first part 22, the second part 24, and the third part 26. As illustrated in the example embodiment in Figure 1B, the adhesive 36 is applied to the channel 38 (i.e., to the sidewalls 27 and the bottom portion 25) of the first part 22 and the third part 26 is placed in the channel 38 such that the first part 22 and third part 26 do not come into contact and are spaced by the layer of adhesive 36. Another layer of adhesive 36 is then placed on a top portion 42 of the third part 26. The second part 24 is then pressed onto the top portion 42 until it abuts the connection surfaces 39 but before the top portion 42 and second part 24 come into contact allowing a uniform layer of adhesive 36 therebetween. During construction, the at least one second connection surface 41 of the second part 24 is brought into contact with the connection surfaces 39 of the first part 22 and joined thereto. Joining the first part 22 and second part 24 includes welding the second connection surfaces 41 of the second part 24 to the connection surfaces 39 via the joined interface 32 and more particularly a weld interface 32. The welding step preferably includes metal inert gas (MIG) welding but can also include resistance spot welding, laser welding, or other welding and joining techniques. The weld interface 32 is preferably on a portion of the connection surfaces 39, 41 that are spaced away from the sidewalls 27, such that the heat produced from welding does not negatively impact the adhesive 36.

Placing the third part 26 in the channel 38 is performed by moving the third part 26 substantially perpendicular to the axis "A" of the channel 38. Accordingly, the third part 26 is pressed linearly downwardly into the adhesive 36 in the channel 38 and angles α1 and α2 extend outwardly from bottom portion 25 to prevent sliding during contact that results in removal or redistribution of the adhesive 36 through sliding/smearing. Preventing removal and/or redistribution of the adhesive 36 ensures that the layer of adhesive 36 uniformly blocks contact between the first part 22 and the third part 26. Likewise, placing the second part 24 on the third part 26 is done by moving the second part 24 substantially perpendicular to the axis A. This linearly downward placement of the second part 24 also prevents removal of the adhesive 36 through sliding contact and ensures that the layer of adhesive 36 blocks contact between the second part 24 and the third part 26. The layer of adhesive 36 could also include several coatings of adhesive. For example, one or more of the parts 22, 24, 26 could be coated in adhesive 36 and allowed to cure before a second coat of adhesive is applied to connected the cured adhesive of at least one part 22, 24, 26 to another part 22, 24, 26.

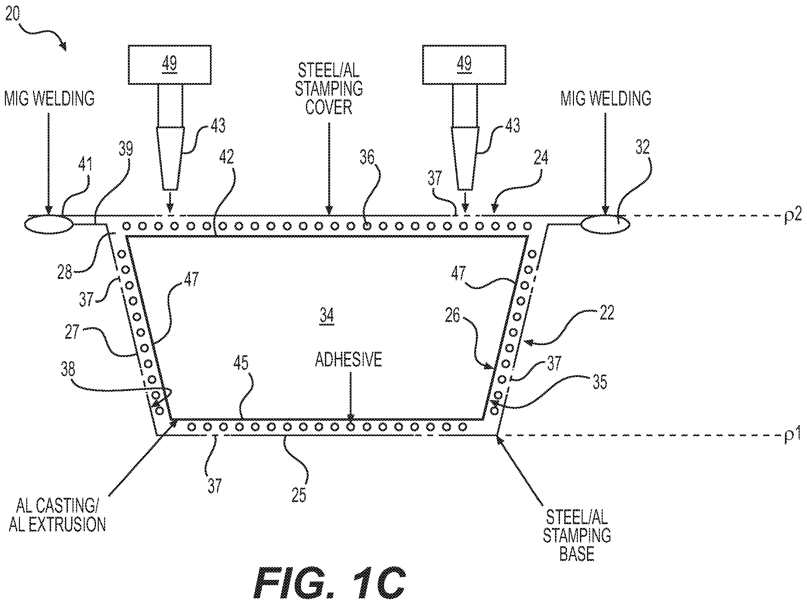

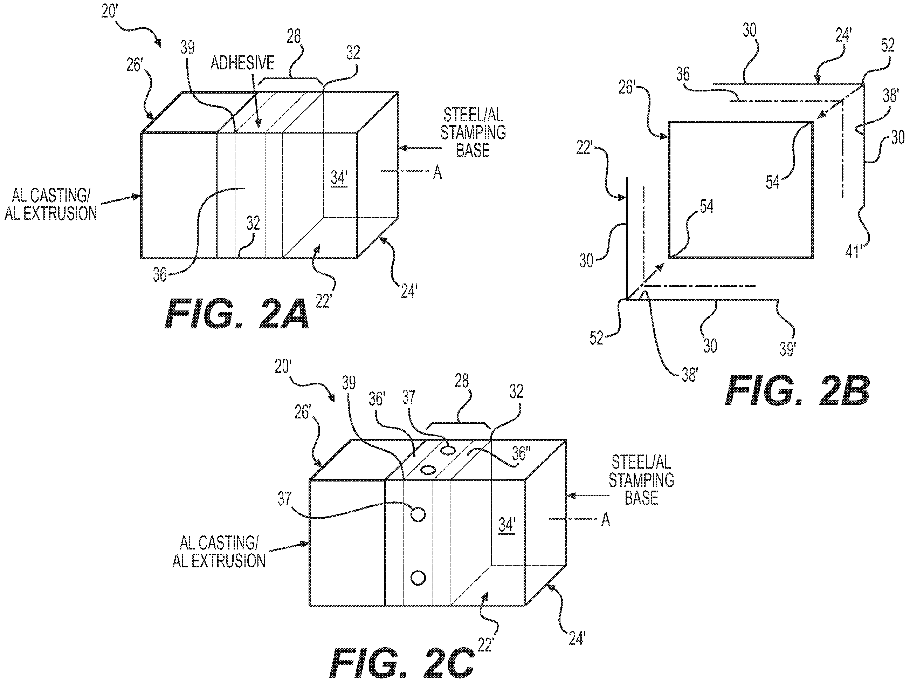

As illustrated in Figure 1C, at least one of the first part 22, the second part 24, and the third part 26 may include one or more apertures 37 for injecting adhesive between parts 22, 24, 26 with an adhesive injection nozzle 43. The adhesive injection nozzle 43 is in fluid communication with an adhesive source 49 that is pressurized. In operation, the adhesive nozzle 43 can be used in conjunction with the above described steps relating to Figure 1B. For example, a layer of adhesive may be applied between the parts 22, 24, 26 for initially spacing the parts 22, 24, 26 and afterwards, the spacing clearance 35 can be completely filled with adhesive via the adhesive injection nozzle 43. Another example of this operation is shown in Figure 2C, wherein a first band of adhesive 36' and a second band of adhesive 36" space the first and second parts 22, 24 from the third part 26 and are spaced from one another. The first and second parts 22, 24 include apertures 37 located between the bands 36', 36". As such, during injection of the adhesive, the bands 36', 36" limit the axial run of the adhesive to retain it locally at the bi-material joint 28. Alternatively, the first and second parts 22, 24 can be permanently joined or clamped together and the third part 26 can be placed in the cavity 34 and clamped or otherwise held so that it is evenly spaced from the first and second parts 22, 24. After placement of parts 22, 24, 26, the spacing clearance 35 can be completely filled with adhesive via the adhesive injection nozzle 43. After injection, if the first part 22 and the second part 24 had not been permanently joined, they can be joined subsequently via welding or other means. It is preferable that during injection, but not required, to inject adhesive with one or more nozzles 43 simultaneously. For example, one or more nozzles 43 may simultaneously inject adhesive into the spacing clearance 35 through one or more apertures 37 in both the first and second parts 22, 24. In another example, one or more apertures 37 may be located on each of the bottom portion 25 and the two sidewalls 27 of the first part 22 and the second part 24 and be simultaneously injected with adhesive. It is preferable, but not required, that each injection nozzle 43 injects adhesive at the same rate and/or via the same pressure. Furthermore, each nozzle 43 may include a separate adhesive source 49 or they may each share one adhesive source 49. In an alternate arrangement, the first part 22 and second part 24 may be integral, i.e., one part 22, 24 with a cavity 34 and utilize the injection nozzles 43 and apertures 37 to space the third part 26 from the one part 22, 24. It addition, the apertures 37 may be only located on the third part 26 so that they are not visible on the completed component 20. As such, the nozzle 43 can be elongated to extend through cavity 34 and mate with apertures 37 in the third part 26.

Referring now to Figure 2A, a component 20' is shown having a rectangular cross-section. The component 20' includes a first part 22', a second part 24', and a third part 26'. The first part 22' and second part 24" have L-shaped cross-sections including two perpendicular walls 30 spaced by a 90° bend 52. As such, both the first part 22' and the second part 24' each define a channel 38' that combines into a cavity 34' when connection surfaces 39' of the first part 22' are attached to second connection surfaces 41' of the second part 24'. While the connection surface 39', 41' are shown as being parallel to walls 30, they may also be angled outwardly, similarly to those shown in Figures 1A and 1B such that the weld interface 32 is spaced from the walls 30. The third part 26' defines a rectangular cross-section with four corners 54. A layer of adhesive 36 is placed on at least one of the first part 22', the second part 24', and the third part 26'. The first part 22' and the second part 24' are then placed around the third part 26' such that the layer of adhesive separates the first part 22' and second part 24' from the third part 26'. Placing the first part 22' and second part 24' on the third part 26' is performed such that the perpendicular walls 30 of the first part 22' and/or second part 24' contact the adhesive layer on the third part 26' simultaneously and the bends 52 are disposed on opposite corners 54 as shown in Figure 2B. After the adhesive 36 has cured, the first part 22' and the second part 24' are joined by welding at weld interfaces 32. The dimension of the of the channels 38' or cavity 34' can be determined based upon the amount and type of adhesive 36 that is applied and the joint strength requirement.

Referring now to Figure 3A, the cradle assembly 40 is illustrated and includes multiple components 20" formed in accordance with the subject disclosure. The cradle assembly 40 includes a pair of rear body mount castings 56 (represented as the third part 26") spaced apart by a rear cross member 58 (represented as the first part 22" and the second part 24"). The rear body mount castings 56 are formed of a first material, such as aluminum material, that can be casted and the rear cross member 58 is formed of a second material such as steel material that can be stamped. The rear body mount castings 56 are joined on opposite sides of the rear cross member 58 to form two bi-material joints 28. Each bi-material joint 28 includes a layer of adhesive 36 that separates the rear body mount castings 56 and the rear cross member 58 such that they do not come into contract. The first part 22" and the second part 24" of the rear cross member 58 can be placed around the rear body mount castings 56 and welded at joined interfaces 32 as previously discussed in reference to Figures 1A through 2C. The cradle assembly 40 further includes front body mount castings 62 formed of aluminum material and a front cross member 64 formed of steel material. The front body mount castings 62 are joined on opposite ends of the front cross member 64 in the same technique as the rear body mount castings 56 are attached to the rear cross member 58. A pair of side members 66 formed of steel material are provided to connect a rear body mount casting 56 to a respective front body mount casting 62 with the same techniques as previously disclosed.

For larger assemblies with multiple combined components, such as the cradle assembly 40, intermediate members 60 can be used. The intermediate members are best illustrated in Figure 3B. For example, the intermediary members 60 may be used to connect rear body mount castings 56 with the rear cross member 58, such that both the mount castings 56 and the rear cross members 58 can be constructed out of a single part. Accordingly, the intermediary member 60 may include a first part 22‴ and a second part 24''' formed of a steel material that is first connected to the rear body mount castings 56, which is formed of an aluminum material in methods previously described with adhesive 36 and spaced weld interfaces 32. The intermediate member 60 may then also be welded directly to the rear cross member 58, which is formed of like material, i.e., steel material. As such, larger elements can be constructed as a singular part and connected via the smaller intermediate members 60 to reduce the overall amount of weld interfaces 32.

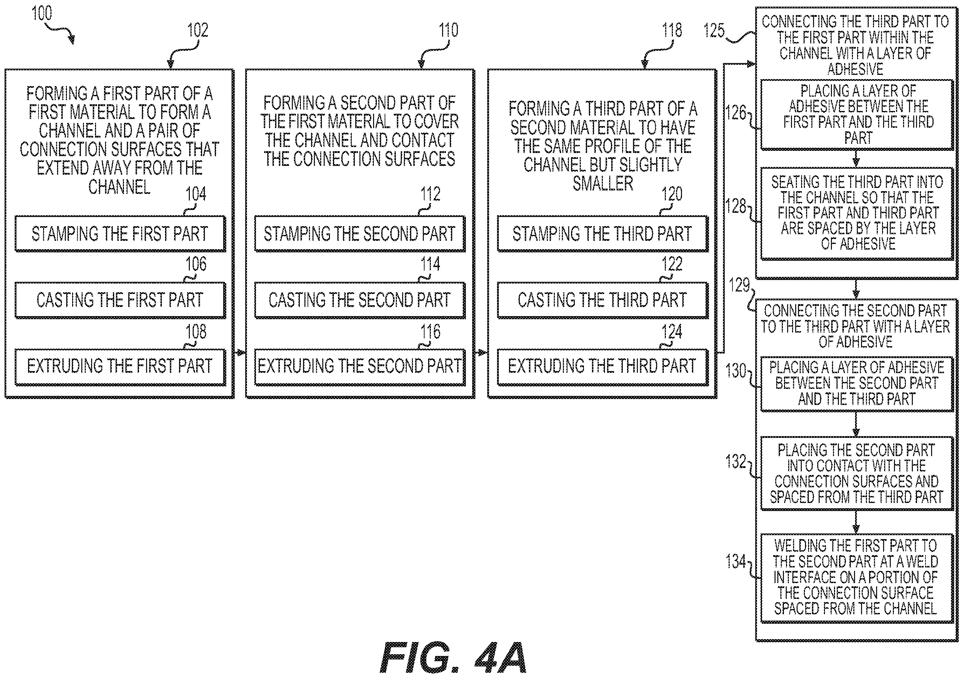

A method 100 of constructing a component is illustrated in a flow chart in Figure 4A. The method begins by forming 102 a first part to form a channel and a pair of connection surfaces. The step of forming 102 can include stamping 104, casting 106, or extruding 108 a first material. In addition, the step of forming the channel may include forming a flat base portion and a pair of flat side walls that extend outwardly from the base at a first and second angle such that the channel gets wider as it gets further from the base portion. The next step involves forming 110 a second part large enough to extend across the channel and that further includes at least second connection surface for contacting the connection surfaces. The step of forming 110 the second part can include stamping 112, casting 114, or extruding 116 the first material. The next step involves forming 118 a third part having the same profile as the channel but slightly smaller. The step of forming 118 the third part can include stamping 120, casting 122, or extruding 124 a second material. The next step involves connecting 125 the third part to the channel of the first part, with a layer of adhesive that spaces the first part from the third part. Step 125 may include placing 126 a layer of adhesive on at least one of the channel of the first part and the third part that spaces the third part from the first part. The step 125 further includes seating 128 the third part into the channel so that it is spaced from the first part by the layer of adhesive. The step of seating 128 the third part can further include linearly seating the third part in the channel such that the third part simultaneously makes contact with the adhesive layer on the flat sidewalls and the adhesive layer of the flat base portion. The method also includes connecting 129 the second part to the third part with a layer of adhesive that spaces the second part from the third part. Step 129 includes placing 130 a layer of adhesive on at least one of the second part and the third part and placing 132 the second part into contact with the first part, such that the second part is spaced from the third part. The step of placing 132 the second part into contact with the third part may further include contacting the at least one flat surface of the second part with the connection surfaces and allowing the adhesive to cure. The method then proceeds by joining, or more specifically welding, 134 the first part to the second part at a weld interface spaced from the side walls forming the channel. The step of placing 126, 130 a layer of adhesive may include coating an entire surface of one of the parts. Unless otherwise provided, the method steps provided above need not be performed in any particular sequential order. For example, the steps for forming 102, 110, and 118 parts may be completed in any order. In addition, the step of placing 126 the layer of adhesive between the first part and the third part may occur simultaneously, before, or after seating 128 the third part into the channel. Likewise, the step of placing 130 the layer of adhesive between the second part and the third part may occur simultaneously, before, or after the step of placing 132 the second part into contact with the connection surfaces. However, it should also be appreciated that in one preferred embodiment, it is preferable that the layer of adhesive is placed 126, 130 between parts before subsequent steps of seating 128 and placing 132 the third part into the channel and contacting the connection surfaces.

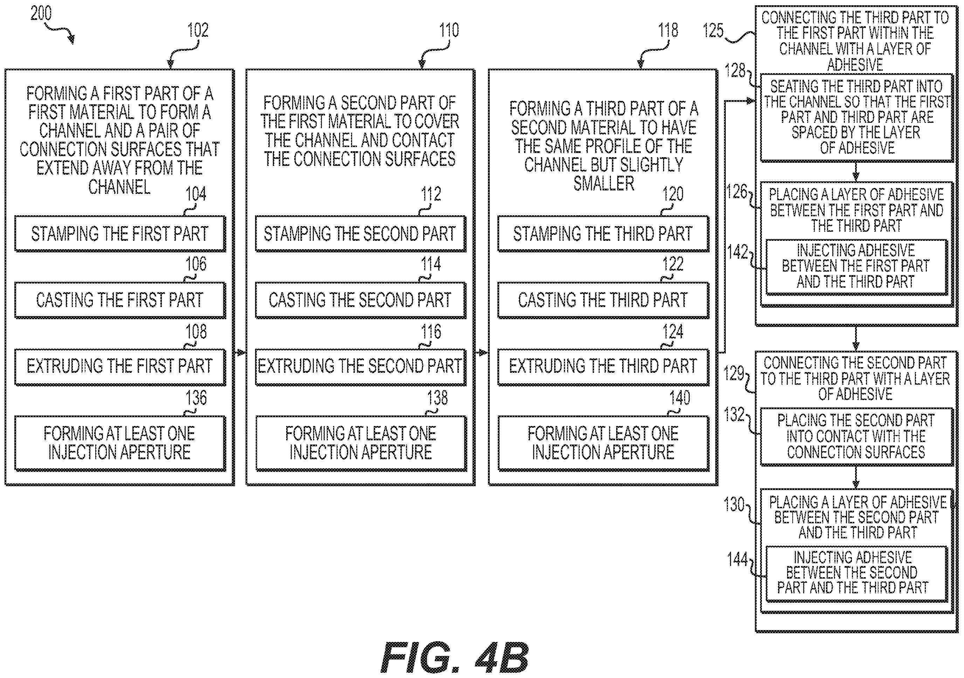

Figure 4B provides another embodiment of the method 200 illustrating steps of placing the layer of adhesive between parts. The method 200 includes at least one of forming 136 at least one injection aperture during the step of forming 102 the first part, forming 138 at least one injection aperture during the step of forming 110 the second part, forming 138 at least one injection aperture during the step of forming 118 the third part. The method 200 includes a step of connecting 125 the third part to the channel of the first part, with a layer of adhesive that spaces the first part from the third part. The step of connecting 125 includes a step of placing 126 a layer of adhesive between the first part and the third part. Step 126 includes injecting 142 adhesive between the first part and the third part. The method 200 further includes a step of connecting 129 the second part to the third part. The step of connecting 129 includes a step of placing 132 a layer of adhesive between the first part and the third part. Step 132 includes injecting 144 adhesive between the second part and the third part. It is preferable that in method 200, the step of injecting adhesive 142, 144 is performed after the steps of seating 128 placing 132. It is more preferable yet that the steps of injecting adhesive 142, 144 occur simultaneously and through the at least one injection aperture. In addition, subsequent steps may include allowing the adhesive to cure and preparing the component for painting and/or other processes.

It should be appreciated that the foregoing description of the embodiments has been provided for purposes of illustration. In other words, the subject disclosure it is not intended to be exhaustive or to limit the disclosure. Individual elements or features of a particular embodiment are generally not limited to that particular embodiment, but, where applicable, are interchangeable and can be used in a selected embodiment, even if not specifically shown or described. For example, the materials used in the first part 22, the second part 24, and the third part 26 may be interchanged as long as the bi-material joint 28 is formed and dissimilar materials are spaced by adhesive 36. Moreover, while many embodiments describe the first material as steel and the second material as aluminum other types of metals may be used as long as the bi-material joint 28 is formed.

## Claims

1. A method of forming a component (20) with an adhesively bonded bimetallic joint (28) comprising the steps of:
forming a first part (22) of a first material, the first part (22) having a channel (38) and a first connection surface (39) on either side of the channel;
forming a second part (24) of the first material, the second part (24) having second connection surfaces sized to make contact with the first connection surfaces (39) and form a cavity (34) between the first part (22) and the second part (24);
forming a third part (26) of a second material, the third part (26) sized and shaped to fit within the cavity (34) between the first part (22) and the second part (24);
connecting the third part (26) to the first part (22) within the channel (38) with a layer of adhesive (36) that spaces the first part from the third part (26);
connecting the second part (24) and the third part (26) with a layer of adhesive (36) that spaces the second part (24) from the third part (26); and
joining the first connection surfaces (39) with the second connection surfaces with a joining interface and allowing the layer of adhesive (36) to cure and prevent contact between the first material and the second material, wherein the step of forming the first part (22) includes forming a pair of sidewalls (27) extending from either side of a bottom portion (25) that combine to delimit the channel (38) and the step of forming the connection surfaces includes forming connection surfaces extending away from the sidewalls and channel (38),
wherein the step of forming the pair of sidewalls (27) includes forming a first side wall extending at a first angle from the bottom portion (25) and a second sidewall extending at a second angle from the bottom portion (25) to form a channel that widens from the base portion, wherein the step of connecting the third part (26) to the channel of the first part (22) includes placing a layer of adhesive (36) between the first part (22) and the third part (26) and subsequently moving the third part (26) linearly downwardly into the channel (38) so that it makes contact with a layer of adhesive (36) on each sidewall (27) and a layer of adhesive (36) on the bottom portion (25) simultaneously to prevent sliding contact and redistribution of the adhesive (36),
wherein the third part (26) has a trapezoidal cross-section having a parallel top portion (42) and bottom (45) separated by sides (47) extending therebetween at angles substantially identical to first and second angle.

2. The method according to Claim 1, wherein the step of forming the joining interface includes forming a weld interface on portions of the connection surfaces spaced from the sidewalls (27) and the cavity (34) to prevent over-heating the adhesive (36).

3. The method according to Claims 1 or 2, wherein the pair of sidewalls (27) and the bottom portion (25) are formed to be planar.

4. The method according to Claim 1, wherein the third part (26) is formed to have a uniform clearance between the first part (22) and the second part (24) when the third part (26) is placed within the cavity (34).

5. The method according to Claim 1, wherein the first material is one of a Steel material, a Magnesium material, an Aluminum material, and a Fiber Reinforced Plastic and the second material is a different one of the Steel material, the Magnesium material, the Aluminum material, and the Fiber Reinforced Plastic.

6. The method according to Claim 1, wherein the step of forming the first part (22) and second part (24) includes stamping the first material consisting predominantly of Steel and the step of forming the third part (26) includes casting the second material consisting predominantly of Aluminum.

7. A component (20) with an adhesively bonded bi-material joint comprising:
a first part (22) and a second part (24) formed of a first material and a third part (26) formed of a second material;
the first part (22) and the second part (24) joined together at a joining interface and defining a cavity (34) therebetween, wherein the third part (26) is disposed in the cavity; and
a layer of adhesive (36) disposed between and spacing the third part (26) from the first part (22) and the second part (24),
wherein the first part (22) has pair of sidewalls (27) extending from either side of a bottom portion (25) that combine to delimit the channel (38) and connection surfaces extending away from the sidewalls and channel (38),
wherein the pair of sidewalls (27) includes a first side wall extending at a first angle from the bottom portion (25) and a second sidewall extending at a second angle from the bottom portion (25) to form a channel that widens from the base portion,
wherein the third part (26) has a trapezoidal cross-section having a parallel top portion (42) and bottom (45) separated by sides (47) extending therebetween at angles substantially identical to first and second angle,
wherein the component (20) is assembled by placing a layer of adhesive (36) between the first part (22) and the third part (26) and subsequently moving the third part (26) linearly downwardly into the channel (38) so that it makes contact with a layer of adhesive (36) on each sidewall (27) and a layer of adhesive (36) on the bottom portion (25) simultaneously to prevent sliding contact and redistribution of the adhesive (36).

8. The component (20) according to Claim 7, wherein the component includes at least a portion of an automotive cradle assembly.

9. The component (20) according to Claim 7, wherein the connection between the third part (26) with the first part (22) and the third part (26) with the second part (24) is only with adhesive (36).

## Patentansprüche

1. Verfahren zur Herstellung eines Bauteils (20) mit einer bimetallischen Klebeverbindung (28), das die folgenden Schritte umfasst:
Ausbilden eines ersten Teils (22) aus einem ersten Material, wobei das erste Teil (22) einen Kanal (38) und eine erste Verbindungsfläche (39) auf jeder Seite des Kanals aufweist;
Bilden eines zweiten Teils (24) aus dem ersten Material, wobei der zweite Teil (24) zweite Verbindungsflächen aufweist, die so bemessen sind, dass sie mit den ersten Verbindungsflächen (39) in Kontakt kommen und einen Hohlraum (34) zwischen dem ersten Teil (22) und dem zweiten Teil (24) bilden;
Ausbilden eines dritten Teils (26) aus einem zweiten Material, wobei das dritte Teil (26) so bemessen und geformt ist, dass es in den Hohlraum (34) zwischen dem ersten Teil (22) und dem zweiten Teil (24) passt;
Verbinden des dritten Teils (26) mit dem ersten Teil (22) innerhalb des Kanals (38) mit einer Klebstoffschicht (36), die das erste Teil von dem dritten Teil (26) beabstandet;
Verbinden des zweiten Teils (24) und des dritten Teils (26) mit einer Klebstoffschicht (36), die das zweite Teil (24) von dem dritten Teil (26) beabstandet; und
Verbinden der ersten Verbindungsflächen (39) mit den zweiten Verbindungsflächen mit einer Verbindungsschnittstelle und Ermöglichen, dass die Klebstoffschicht (36) aushärtet und einen Kontakt zwischen dem ersten Material und dem zweiten Material verhindert, wobei der Schritt des Bildens des ersten Teils (22) das Bilden eines Paars von Seitenwänden (27) umfasst, die sich von jeder Seite eines Bodenabschnitts (25) erstrecken und zusammen den Kanal (38) begrenzen, und der Schritt des Bildens der Verbindungsflächen das Bilden von Verbindungsflächen umfasst, die sich von den Seitenwänden und dem Kanal (38) weg erstrecken,
wobei der Schritt des Ausbildens des Paars von Seitenwänden (27) das Ausbilden einer ersten Seitenwand, die sich in einem ersten Winkel von dem Bodenabschnitt (25) erstreckt, und einer zweiten Seitenwand, die sich in einem zweiten Winkel von dem Bodenabschnitt (25) erstreckt, umfasst, um einen Kanal zu bilden, der sich von dem Basisabschnitt aus erweitert, wobei der Schritt des Verbindens des dritten Teils (26) mit dem Kanal des ersten Teils (22) das Anbringen einer Klebstoffschicht (36) zwischen dem ersten Teil (22) und dem dritten Teil (26) und das anschließende lineare Abwärtsbewegen des dritten Teils (26) in den Kanal (38) hinein umfasst, so dass es gleichzeitig mit einer Klebstoffschicht (36) an jeder Seitenwand (27) und einer Klebstoffschicht (36) an dem Bodenabschnitt (25) in Kontakt kommt, um einen Gleitkontakt und eine Neuverteilung des Klebstoffs (36) zu verhindern,
wobei das dritte Teil (26) einen trapezförmigen Querschnitt mit einem parallelen oberen Abschnitt (42) und einem Boden (45) aufweist, die durch Seiten (47) getrennt sind, die sich dazwischen in Winkeln erstrecken, die im Wesentlichen identisch mit dem ersten und zweiten Winkel sind.

2. Verfahren nach Anspruch 1, wobei der Schritt des Ausbildens der Verbindungsschnittstelle das Ausbilden einer Schweißschnittstelle an Abschnitten der Verbindungsflächen umfasst, die von den Seitenwänden (27) und dem Hohlraum (34) beabstandet sind, um ein Überhitzen des Klebstoffs (36) zu verhindern.

3. Verfahren nach Anspruch 1 oder 2, wobei das Paar von Seitenwänden (27) und der Bodenabschnitt (25) eben ausgebildet sind.

4. Verfahren nach Anspruch 1, wobei das dritte Teil (26) so ausgebildet ist, dass es einen gleichmäßigen Abstand zwischen dem ersten Teil (22) und dem zweiten Teil (24) aufweist, wenn das dritte Teil (26) in dem Hohlraum (34) angeordnet ist.

5. Verfahren nach Anspruch 1, wobei das erste Material eines aus einem Stahlmaterial, einem Magnesiummaterial, einem Aluminiummaterial und einem faserverstärkten Kunststoff ist und das zweite Material ein anderes aus dem Stahlmaterial, dem Magnesiummaterial, dem Aluminiummaterial und dem faserverstärkten Kunststoff ist.

6. Verfahren nach Anspruch 1, wobei der Schritt des Formens des ersten Teils (22) und des zweiten Teils (24) das Stanzen des ersten Materials, das überwiegend aus Stahl besteht, und der Schritt des Formens des dritten Teils (26) das Gießen des zweiten Materials, das überwiegend aus Aluminium besteht, umfasst.

7. Bauteil (20) mit einer geklebten Bi-Material-Verbindung, umfassend:
ein erstes Teil (22) und ein zweites Teil (24), die aus einem ersten Material gebildet sind, und ein drittes Teil (26), das aus einem zweiten Material gebildet ist;
wobei das erste Teil (22) und das zweite Teil (24) an einer Verbindungsschnittstelle miteinander verbunden sind und einen Hohlraum (34) dazwischen definieren, wobei das dritte Teil (26) in dem Hohlraum angeordnet ist; und
eine Klebstoffschicht (36), die zwischen dem dritten Teil (26) und dem ersten Teil (22) und dem zweiten Teil (24) angeordnet ist und diese beabstandet,
wobei das erste Teil (22) ein Paar von Seitenwänden (27) aufweist, die sich von beiden Seiten eines Bodenabschnitts (25) erstrecken und zusammen den Kanal (38) begrenzen, und Verbindungsflächen, die sich von den Seitenwänden und dem Kanal (38) weg erstrecken,
wobei das Paar von Seitenwänden (27) eine erste Seitenwand umfasst, die sich in einem ersten Winkel von dem Bodenabschnitt (25) erstreckt, und eine zweite Seitenwand, die sich in einem zweiten Winkel von dem Bodenabschnitt (25) erstreckt, um einen Kanal zu bilden, der sich von dem Basisabschnitt aus erweitert,
wobei das dritte Teil (26) einen trapezförmigen Querschnitt mit einem parallelen oberen Abschnitt (42) und einem Boden (45) hat, die durch Seiten (47) getrennt sind, die sich dazwischen in Winkeln erstrecken, die im Wesentlichen identisch mit dem ersten und zweiten Winkel sind,
wobei das Bauteil (20) zusammengebaut wird, indem eine Klebstoffschicht (36) zwischen dem ersten Teil (22) und dem dritten Teil (26) angeordnet wird und anschließend das dritte Teil (26) linear nach unten in den Kanal (38) bewegt wird, so dass es gleichzeitig mit einer Klebstoffschicht (36) an jeder Seitenwand (27) und einer Klebstoffschicht (36) am Bodenabschnitt (25) in Kontakt kommt, um einen Gleitkontakt und eine Umverteilung des Klebstoffs (36) zu verhindern.

8. Bauteil (20) nach Anspruch 7, wobei das Bauteil mindestens einen Teil einer Kraftfahrzeugträgeranordnung umfasst.

9. Bauteil (20) nach Anspruch 7, wobei die Verbindung zwischen dem dritten Teil (26) mit dem ersten Teil (22) und dem dritten Teil (26) mit dem zweiten Teil (24) nur mit Klebstoff (36) erfolgt.

## Revendications

1. Procédé de formation d'un composant (20) avec un joint bimétallique lié par adhésif (28) comprenant les étapes suivantes :
former une première partie (22) d'un premier matériau, la première partie (22) ayant un canal (38) et une première surface de connexion (39) de part et d'autre du canal ;
former une deuxième partie (24) du premier matériau, la deuxième partie (24) ayant des deuxièmes surfaces de connexion dimensionnées pour entrer en contact avec les premières surfaces de connexion (39) et former une cavité (34) entre la première partie (22) et la deuxième partie (24) ;
former une troisième partie (26) en un deuxième matériau, la troisième partie (26) étant dimensionnée et formée pour s'insérer dans la cavité (34) entre la première partie (22) et la deuxième partie (24) ;
relier la troisième partie (26) à la première partie (22) à l'intérieur du canal (38) avec une couche d'adhésif (36) qui sépare la première partie de la troisième partie (26) ;
relier la deuxième partie (24) et la troisième partie (26) avec une couche d'adhésif (36) qui sépare la deuxième partie (24) de la troisième partie (26) ; et
joindre les premières surfaces de raccordement (39) aux deuxièmes surfaces de raccordement avec une interface de raccordement et permettre à la couche d'adhésif (36) de durcir et d'empêcher tout contact entre le premier matériau et le deuxième matériau, l'étape de formation de la première partie (22) consistant à former une paire de parois latérales (27) s'étendant de part et d'autre d'une partie inférieure (25) qui se combinent pour délimiter le canal (38) et l'étape de formation des surfaces de raccordement consistant à former des surfaces de raccordement s'étendant à l'écart des parois latérales et du canal (38),
dans laquelle l'étape de formation de la paire de parois latérales (27) comprend la formation d'une première paroi latérale s'étendant à un premier angle à partir de la partie inférieure (25) et d'une deuxième paroi latérale s'étendant à un deuxième angle à partir de la partie inférieure (25) pour former un canal qui s'élargit à partir de la partie de base, dans lequel l'étape de connexion de la troisième partie (26) au canal de la première partie (22) consiste à placer une couche d'adhésif (36) entre la première partie (22) et la troisième partie (26) et à déplacer ensuite la troisième partie (26) linéairement vers le bas dans le canal (38) de manière à ce qu'elle entre en contact avec une couche d'adhésif (36) sur chaque paroi latérale (27) et une couche d'adhésif (36) sur chaque paroi latérale (27) et une couche d'adhésif (36) sur chaque paroi latérale (27).
(36) sur la partie inférieure (25) simultanément afin d'éviter tout contact glissant et toute redistribution de l'adhésif (36),
la troisième partie (26) a une section transversale trapézoïdale avec une partie supérieure (42) et une partie inférieure (45) parallèles, séparées par des côtés (47) s'étendant entre elles à des angles sensiblement identiques au premier et au deuxième angle.

2. Procédé selon la revendication 1, dans lequel l'étape de formation de l'interface d'assemblage comprend la formation d'une interface de soudure sur les parties des surfaces de connexion espacées des parois latérales (27) et de la cavité (34) afin d'empêcher la surchauffe de l'adhésif (36).

3. Procédé selon les revendications 1 ou 2, dans lequel la paire de parois latérales (27) et la partie inférieure (25) sont formées pour être planes.

4. Procédé selon la revendication 1, dans lequel la troisième partie (26) est formée pour avoir un jeu uniforme entre la première partie (22) et la deuxième partie (24) lorsque la troisième partie (26) est placée à l'intérieur de la cavité (34).

5. Procédé selon la revendication 1, dans lequel le premier matériau est un matériau en acier, un matériau en magnésium, un matériau en aluminium et un plastique renforcé de fibres, et le deuxième matériau est un matériau différent parmi le matériau en acier, le matériau en magnésium, le matériau en aluminium et le plastique renforcé de fibres.

6. Procédé selon la revendication 1, dans lequel l'étape de formation de la première partie (22) et de la deuxième partie (24) comprend l'emboutissage du premier matériau constitué principalement d'acier et l'étape de formation de la troisième partie (26) comprend le moulage du deuxième matériau constitué principalement d'aluminium.

7. Composant (20) avec un joint bi-matériau collé comprenant :
une première partie (22) et une deuxième partie (24) constituées d'un premier matériau et une troisième partie (26) constituée d'un deuxième matériau ;
la première partie (22) et la deuxième partie (24) sont assemblées au niveau d'une interface d'assemblage et définissent une cavité (34) entre elles, la troisième partie (26) étant disposée dans la cavité ; et
une couche d'adhésif (36) disposée entre la troisième partie (26) et la première partie (22) et la deuxième partie (24) et les séparant,
la première partie (22) comporte une paire de parois latérales (27) s'étendant de part et d'autre d'une partie inférieure (25) qui se combinent pour délimiter le canal (38) et des surfaces de raccordement s'étendant à l'écart des parois latérales et du canal (38),
la paire de parois latérales (27) comprend une première paroi latérale s'étendant à un premier angle à partir de la partie inférieure (25) et une deuxième paroi latérale s'étendant à un deuxième angle à partir de la partie inférieure (25) pour former un canal qui s'élargit à partir de la partie de base,
la troisième partie (26) a une section transversale trapézoïdale avec une partie supérieure (42) et une partie inférieure (45) parallèles, séparées par des côtés (47) s'étendant entre elles à des angles sensiblement identiques au premier et au deuxième angle,
dans lequel le composant (20) est assemblé en plaçant une couche d'adhésif (36) entre la première partie (22) et la troisième partie (26) et en déplaçant ensuite la troisième partie (26) linéairement vers le bas dans le canal (38) de manière à ce qu'elle entre en contact avec une couche d'adhésif (36) sur chaque paroi latérale (27) et une couche d'adhésif (36) sur la partie inférieure (25) simultanément pour empêcher le contact par glissement et la redistribution de l'adhésif (36).

8. Composant (20) selon la revendication 7, dans lequel le composant comprend au moins une partie d'un assemblage de berceau automobile.

9. Composant (20) selon la revendication 7, dans lequel la liaison entre la troisième partie (26) et la première partie (22) et entre la troisième partie (26) et la deuxième partie (24) se fait uniquement par adhésif (36).
